# FASCICULE DE BREVET EUROPEEN

(11) **EP 1 908 380 B1**
(45) Date de publication et mention de la délivrance du brevet: **11.05.2011**
(21) Numéro de dépôt: 07023847.2
(22) Date de dépôt: 27.11.2002
(51) Int. Cl.: A47J 36/20, A47J 27/08, A47J 45/06

(54) **Procédé de fabrication d'un panier de cuisson d'aliments par emboutissage**
Herstellungsverfahren eines Lebensmittel-Garkorbs durch Tiefziehen
Manufacturing a food cooking basket by stamping

(30) Priorité: 27.11.2001 FR 0115577
(43) Date de publication de la demande: 09.04.2008
(62) Demande divisionnaire de: 02356245.7
(73) Titulaire: SEB S.A., 69132 Ecully Cedex (FR)
(72) Inventeur: Murat, Marie Pierre, 21121 Fontaine Les Dijon (FR); Birlouez-Aragon, Inès, 75231 Paris Cedex 05 (FR); Lanoiselle, Jean Louis, 60400 Salency (FR); Rhetat, Eric Christian Jacques, 21000 Dijon (FR)
(74) Mandataire: Martin, Didier Roland Valéry

(56) Documents cités:
- DE-U- 29 721 793
- DE-U1- 9 416 366
- DE-U1- 20 007 669
- FR-A- 2 643 805
- FR-A- 2 783 685
- GB-A- 207 085
- GB-A- 618 981

## Description

La présente invention se rapporte au domaine technique général des appareils de cuisson sous pression, tels que des autocuiseurs, et plus particulièrement aux paniers de cuisson d'aliments qui sont destinés à être mis en place dans ces appareils, avantageusement à une certaine hauteur dans la cuve, pour assurer la cuisson des aliments.

La présente invention se rapporte également aux procédés de fabrication de paniers de cuisson d'aliments pour autocuiseurs, lorsque lesdits paniers sont réalisés à partir de feuilles de métal et obtenus par emboutissage.

La présente invention concerne un procédé de fabrication d'un panier de cuisson d'aliments pour autocuiseur par emboutissage d'une feuille de métal.

Pour permettre à l'utilisateur d'un autocuiseur de réaliser la cuisson d'aliments autrement que par immersion des aliments dans le liquide contenu dans la cuve de cuisson, il est nécessaire de prévoir d'intégrer dans la cuve un panier de cuisson (tel que celui décrit dans le document FR-2 783 685) contenant les aliments, ainsi que des moyens de support du panier de cuisson ménagés dans ou à partir des parois et à une certaine hauteur prédéterminée, de manière à permettre de supporter le panier à une hauteur prédéterminée au-dessus du liquide de cuisson. Il est également nécessaire de prévoir un certain nombre de perforations dans le panier, de manière à permettre la circulation de la vapeur non seulement dans l'enceinte de l'autocuiseur, mais également à travers l'aliment, de manière à favoriser un échange de chaleur optimal.

De tels systèmes sont largement connus et mettent en oeuvre des paniers, généralement métalliques, de forme et de contenance diverses, les moyens de support des paniers étant constitués d'un support amovible, réalisé par exemple à partir d'un fil d'acier mis en place sur le fond de la cuve lorsque l'utilisateur veut réaliser une cuisson à la vapeur. Il existe également des moyens de support formés par des pièces rapportées sur la paroi de la cuve (rivets) ou par des déformations localisées de la paroi de la cuve, ces déformations supportant le panier à une hauteur prédéterminée du fond de la cuve.

Les paniers métalliques connus à ce jour peuvent être regroupés en deux types principaux.

Le premier type est formé par des paniers dits « *filets »* obtenus à l'aide de fils d'acier entrelacés ou maillés et pourvus d'une structure de rigidification leur permettant une certaine tenue mécanique. De tels paniers donnent généralement satisfaction, mais souffrent d'inconvénients liés à la difficulté de contenir les aliments en raison du large maillage et à leur grande difficulté de nettoyage, en raison précisément du maillage qui nuit notamment à une bonne évacuation des déchets d'aliments. Par ailleurs, la durée de vie de tels paniers est réduite en raison de leur relative fragilité.

Le second type de paniers connus est formé par des paniers métalliques obtenus par emboutissage et comportant une série de perforations ménagées soit au fond du panier, soit au fond et à travers les parois latérales. Ces paniers donnent généralement satisfaction et sont d'une nettoyabilité acceptable. En revanche, leur capacité à assurer un bon échange de chaleur avec les aliments est éminemment variable et difficilement maîtrisée et maîtrisable.

On sait par ailleurs qu'une alimentation équilibrée nécessite un apport régulier de vitamines, en particulier de vitamine C, à partir de fruits et légumes qui en sont les sources principales. Or, il apparaît que les études effectuées sur ce sujet ont montré non seulement un niveau de consommation de fruits et légumes insuffisant dans la population au cours des dernières années, mais encore une tendance générale exprimant une baisse relative de cette consommation. Parmi les facteurs pouvant expliquer ce faible niveau de consommation et cette tendance générale, on note, chez le consommateur potentiel, l'existence d'une série de contraintes d'usage tendant à limiter la consommation des fruits et légumes, à savoir: la nécessité d'un approvisionnement fréquent, la nécessité d'un nettoyage, voire d'un épluchage, et enfin la nécessité d'avoir recours à une opération de cuisson pour les légumes, étant entendu que cette dernière contrainte, perçue négativement, est une contrainte de durée de cuisson.

Il existe donc de manière générale un besoin participant à l'amélioration des conditions générales d'alimentation, ou du moins à leur absence de dégradation, conduisant à rechercher des solutions permettant de réduire le temps de cuisson des aliments, et notamment des légumes.

Par ailleurs, on sait également que les vitamines sont très sensibles aux conditions de cuisson, et peuvent être détruites en tout ou partie, lessivées, voire dégradées, au cours de cette opération. Parmi l'ensemble des vitamines, la vitamine C est la plus fragile, alors même que les fruits et légumes contribuent pour environ 85% aux apports nutritionnels en vitamine C. Le maintien d'un taux de vitamine C dans les légumes à l'issue d'une opération de cuisson, notamment sous pression, s'avère donc un problème extrêmement important.

Parmi les phénomènes de fragilité à la cuisson connus pour la vitamine C contenue dans les légumes, on peut rappeler que cette dernière est hydrosoluble lorsqu'elle est sous la forme de folates, ce qui la rend sensible au lessivage par l'eau de cuisson. Par ailleurs, la vitamine C est sensible à la chaleur et sera détruite de manière proportionnelle au couple temps / température appliqué lors de la cuisson.

Enfin, la vitamine C est sensible à l'oxydation et sera donc d'autant plus dégradée qu'elle sera mise au contact de l'air.

Il existe donc également un problème général de préservation des vitamines, notamment de la vitamine C, lors de la cuisson des légumes dans des appareils de cuisson sous pression tels que des autocuiseurs.

L'objet assigné à l'invention vise en conséquence à réaliser un nouveau panier de cuisson d'aliments destiné à la cuisson sous pression dans un autocuiseur, qui permette de réduire le temps de cuisson des aliments tout en préservant les vitamines présentes dans les aliments, notamment les légumes.

Un autre objet de l'invention vise à proposer un nouveau panier de cuisson d'aliments qui permette d'optimiser la circulation de la vapeur dans l'enceinte de l'autocuiseur, tout en permettant de réaliser facilement un tel panier de manière industrielle.

Un autre objet de l'invention vise à proposer un nouveau panier de cuisson d'aliments qui soit aisément nettoyable.

Un autre objet de l'invention vise à proposer un nouveau panier de cuisson qui ne perturbe pas le fonctionnement des organes de sécurité de l'autocuiseur, dans lequel le panier est monté.

Un autre objet de l'invention vise à proposer un nouveau panier de cuisson d'aliments qui soit particulièrement robuste et facile à fabriquer, tout en étant aisément manipulable et positionnable à volonté.

Un autre objet de l'invention vise à proposer un nouveau panier de cuisson dont la manipulation est facilitée et dépourvue de risques de brûlures.

Un autre objet de l'invention vise également à proposer un nouvel autocuiseur permettant, sans perturber le fonctionnement général et sécuritaire de l'autocuiseur, de cuire sous pression, de manière différenciée, différentes sortes d'aliments.

Un autre objet de l'invention vise à proposer un nouveau procédé de fabrication par emboutissage d'un panier de cuisson d'aliments, permettant d'obtenir de manière simple et répétitive un panier de cuisson.

Un autre objet de l'invention vise à proposer un nouveau procédé de fabrication particulièrement simple et efficace à mettre en oeuvre.

Les objets assignés à l'invention sont atteints à l'aide d'un procédé de fabrication d'un panier de cuisson d'aliments pour autocuiseur par emboutissage d'une feuille de métal conforme à l'objet de la revendication 1.

D'autres objets et avantages de l'invention seront explicités plus en détails à la lecture de la description qui suit et des dessins annexés donnés à titre d'exemples illustratifs et non limitatifs dans lesquels :
- La figure 1 illustre, selon une vue en perspective, un panier de cuisson conforme à l'invention.
- La figure 2 illustre, selon une vue de dessus, un panier de cuisson conforme à l'invention et identique à celui représenté à la figure 1.
- La figure 3 illustre, selon une vue en coupe transversale, un détail de réalisation d'un panier de cuisson conforme à l'invention.
- La figure 4 illustre, selon une vue en coupe transversale, un panier de cuisson en position haute dans un autocuiseur.
- La figure 4A illustre, selon une vue en coupe transversale, un autocuiseur conforme à l'invention et incorporant deux paniers de cuisson conformes à l'invention en position de superposition.
- La figure 5 illustre les différentes étapes d'emboutissage successives menant à la réalisation d'un panier de cuisson conforme à l'invention.
- La figure 6 illustre l'homogénéité de montée en températures des aliments au sein d'un panier de cuisson selon l'invention.
- La figure 7 illustre, selon une base comparable au graphe de la figure 6, l'hétérogénéité de montée en températures des aliments contenus dans un panier de cuisson de l'art antérieur.

Le panier de cuisson d'aliments selon l'invention est destiné à être utilisé et disposé dans un appareil de cuisson d'aliments, du genre autocuiseur, qu'il s'agisse d'autocuiseurs à étrier, à mâchoires, à baïonnettes ou encore à trou d'homme, sans que cette liste soit considérée comme limitative.

Dans la description qui suit, le panier de cuisson conforme à l'invention sera avantageusement réalisé sous la forme d'un panier de forme circulaire, sans que cette forme soit limitative, les paniers de cuisson d'aliments conformes à l'invention pouvant au contraire présenter toute forme autre que circulaire, et par exemple rectangulaire, carré ou autre, sans pour autant sortir du cadre de l'invention.

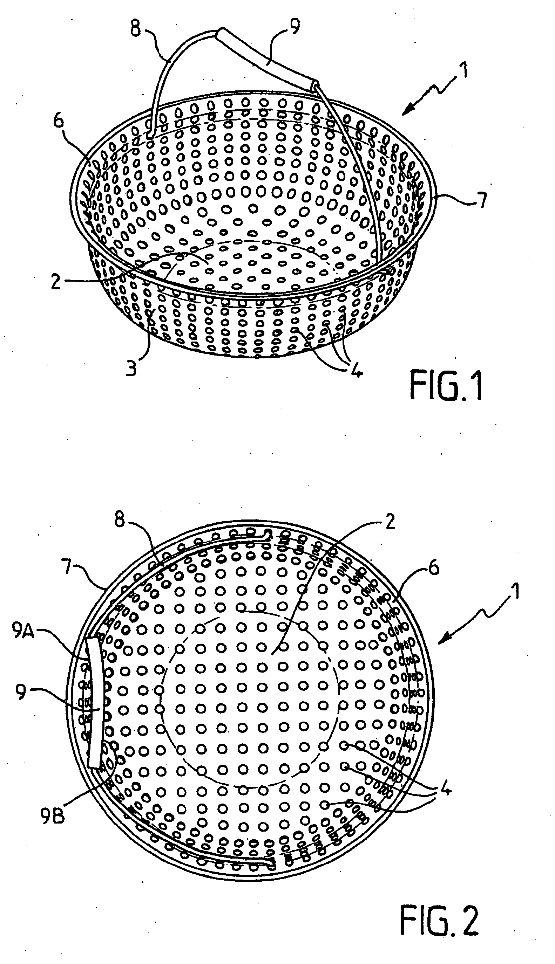

Le panier de cuisson d'aliments 1 illustré aux figures 1 à 5 est destiné à la cuisson sous pression dans un autocuiseur, et il est formé par une feuille d'un matériau rigide définissant le fond 2 et les parois latérales 3 du panier 1, ladite feuille étant pourvue de perforations 4.

Au sens de l'invention, le matériau rigide pourra être à base de tous matériaux susceptibles de résister durablement et en continu à une utilisation dans un autocuiseur nécessitant un contact alimentaire, des phases successives et répétées de nettoyage et des phases de montée en températures et en pression.

Avantageusement, la feuille de matériau rigide sera métallique, et avantageusement en inox, étant entendu néanmoins que d'autres types de matériaux, et notamment des matériaux plastiques, peuvent être envisagés, sans pour autant sortir du cadre général de l'invention.

Selon une caractéristique importante de l'invention, les perforations 4 sont ménagées au moins à travers les parois latérales 3, et représentent au moins 30% de la surface totale de la feuille constituant le panier et formant sa surface totale.

Il est en effet apparu qu'en deçà de ce ratio exprimant un rapport entre la surface de la feuille formant le conteneur proprement dit et les perforations 4, la réalisation industrielle du panier était délicate, et surtout les effets relatifs à la diminution du temps de cuisson et à la rétention de vitamines dans les aliments contenus dans le panier 1 n'étaient ni optimisés, ni bénéfiques.

Avantageusement, les perforations 4 des parois latérales 3 sont réalisées et réparties sensiblement régulièrement et dès le bas des parois latérales 3 adjacentes au fond 2, ainsi que sensiblement sur toute la circonférence des parois latérales et jusqu'à une hauteur déterminée.

Il a en effet pu être observé que l'effet de rétention vitaminique et de réduction du temps de cuisson était d'autant plus significatif que les perforations 4 étaient situées dans la partie basse du panier 1 jusqu'à une hauteur déterminée correspondant sensiblement à la hauteur des aliments présents dans le panier de cuisson 1.

De manière préférentielle, les perforations 4 représentent au moins 35% de la surface totale de la feuille, et de préférence entre 35 et 58%.

De manière particulièrement avantageuse, et tel qu'illustré aux figures 1 à 5, les perforations 4 sont réparties sensiblement régulièrement sur et à travers le fond 2 et les parois latérales 3. Il s'est en effet avéré que les meilleurs résultats étaient obtenus avec un panier comportant des perforations 4 sur le fond 2, et au moins sur une hauteur significative des parois latérales 3.

Tel qu'illustré aux figures 1 à 5, et selon une variante préférentielle, les perforations 4 des parois latérales 3 sont réalisées jusqu'au bord supérieur 6 desdites parois latérales 3, de manière à obtenir un panier de cuisson dont la totalité de la surface est perforée régulièrement.

Tel qu'illustré aux figures, les perforations 4 sont avantageusement sensiblement circulaires et d'un diamètre au moins égal à 3 mm, et de préférence compris entre 3 et 5 mm. Les perforations 4 pourront néanmoins être de formes différentes et de tailles supérieures, sans pour autant sortir du cadre de l'invention.

Les perforations 4, lorsqu'elles sont circulaires, seront disposées à des distances régulières, et par exemple d'entraxe régulier compris entre 5 à 8 mm, l'épaisseur de la feuille du matériau rigide étant par exemple comprise dans la fourchette 0,4 à 0,8 mm, de préférence de l'ordre de 0,5 mm, voire 0,4 mm.

Tel qu'illustré aux figures, les perforations 4 pourront être disposées en lignes régulières ou selon des dispositions préférentielles de nomenclature en T, en U, en M ou en Z, selon l'arrangement géométrique des perforations les unes par rapport aux autres.

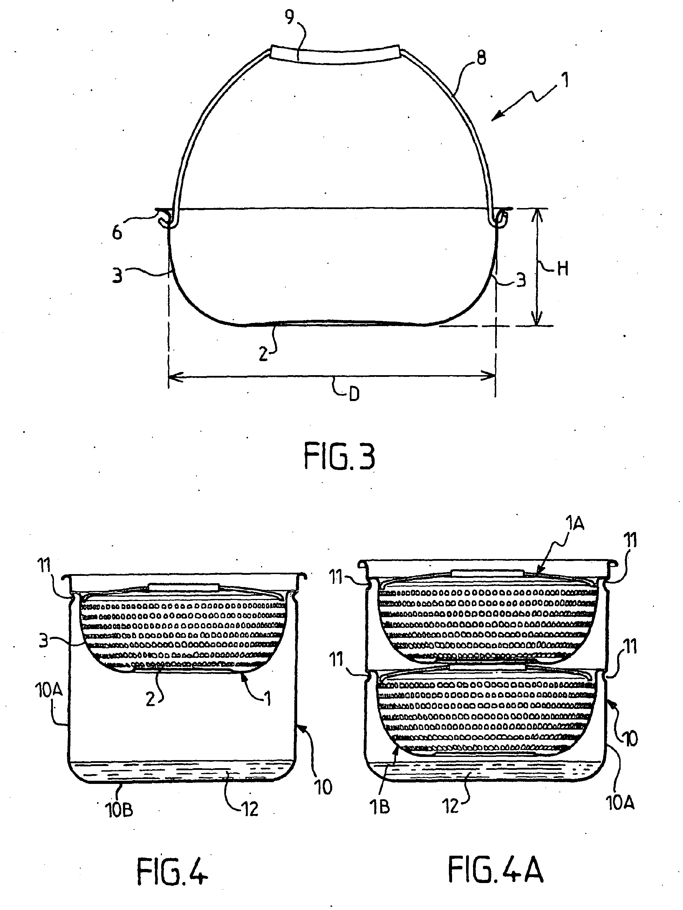

Tel qu'illustré à la figure 3, la jonction entre le fond 2 et les parois latérales 3 sera avantageusement réalisée de manière à présenter une courbure régulière, par exemple de valeur R supérieure ou égale à H/2, H étant la hauteur du panier 1 (cf. figure 3). Il s'est en effet avéré que le maintien d'un rayon de courbure était de nature à réduire les perturbations internes dues au flux de cuisson, qui pouvait avoir tendance à gêner la bonne montée des dispositifs de sécurité de l'autocuiseur, et notamment de la ou des soupape(s) de sécurité et de verrouillage.

Avantageusement, le panier 1 selon l'invention sera de section circulaire avec un diamètre D et une hauteur H sensiblement égale à 1/3 D.

Tel qu'illustré aux figures 1 à 5, les parois latérales 3 se terminent à leur extrémité supérieure par un bord courbe 6, s'étendant radialement et vers l'extérieur du panier en considération de son axe de symétrie axiale, et ce d'une longueur constante sur toute sa périphérie, c'est-à-dire périphériquement. Cette particularité permet à l'appareil de cuisson d'être positionné sans indexation angulaire particulière dans la cuve de cuisson de l'autocuiseur. Par ailleurs, la présence d'un bord courbe 6 continu et épousant, au jeu près nécessaire à l'insertion du panier, la paroi interne de la cuve de l'autocuiseur, force la vapeur à passer à travers le panier, et donc les aliments, optimisant ainsi le transfert de chaleur.

Le bord courbe 6 est avantageusement pourvu d'un jonc périphérique 7, par exemple métallique, rapporté et replié sur ledit bord, de manière à renforcer la rigidité du panier et parfaire sa finition.

Tel qu'illustré aux figures 1 à 3, le panier selon l'invention comporte une anse de préhension 8 montée pivotante entre une position de support du panier, tel qu'illustré à la figure 1, et au moins une position de repos, tel qu'illustré à la figure 2, où elle repose sur le bord supérieur 6 du panier, en suivant sensiblement la périphérie du bord. Selon cette configuration, l'anse de préhension 8 est sensiblement semi-circulaire.

Avantageusement, et selon l'invention, l'anse de préhension 8 comporte, sensiblement dans sa partie centrale, une portion de préhension 9 à base de silicone qui forme un retrait intérieur par rapport au reste de l'anse, de manière à ne pas reposer sur ledit bord 6.

Dans la variante préférentielle illustrée à la figure 2, la portion de préhension 9 est courbe et forme une partie courbe régulière définissant une partie concave 9A tournée vers l'extérieur du panier et une partie convexe 9B tournée vers l'intérieur du panier. Une telle particularité facilite grandement la préhension de l'anse, tout en évitant à l'utilisateur de se brûler.

Tel qu'illustré aux figures 4 et 4A, le panier de cuisson 1 est destiné à être disposé dans une cuve 10 d'un autocuiseur pourvu d'un couvercle (non représenté aux figures), de manière à réaliser une cuisson sous pression.

L'autocuiseur selon l'invention comprend une cuve 10 comportant des moyens de support 11 du panier 1 dans la cuve, lesdits moyens de support 11 étant ménagés radialement dans ou à partir des parois 10A de la cuve. Ces moyens de support 11 sont bien connus de l'homme du métier et peuvent consister en des bossettes (ou tout moyen similaire), obtenus par exemple par pressage ou déformation de la paroi, tel que décrit par exemple dans le brevet FR-2 783 685 du même demandeur. Selon cette configuration, le panier de cuisson 1 selon l'invention est déposé dans la cuve 10, de manière que le rebord 6 soit en appui contre les moyens de support 11, répartis angulairement à la même hauteur sur les parois latérales 3.

Tel qu'illustré à la figure 4, les moyens support 11 étant à une hauteur prédéterminée et suffisante du fond 10B de la cuve 10, le panier 1 repose à distance dudit fond 10B et du liquide 12 éventuellement contenu dans la cuve 10.

Selon une caractéristique importante de l'invention, l'autocuiseur conforme à l'invention comprend une cuve 10 qui comporte au moins deux rangées de moyens support 11 disposées chacune à des hauteurs de références différentes, de manière à permettre de disposer au moins deux paniers de cuisson superposés dans la cuve, tel qu'illustré à la figure 4A. Grâce à cette disposition, il est ainsi possible de placer un premier panier 1A en position supérieure et un second panier 1 B en position inférieure, les deux paniers n'étant toutefois pas immergés dans la réserve de liquide 12 et permettant en conséquence une cuisson d'aliments à la vapeur, sans avoir à les mélanger en utilisant, comme c'est le cas dans l'art antérieur, un seul et unique panier.

Par ailleurs, la maîtrise de la circulation de la vapeur dans l'enceinte de l'autocuiseur, grâce à la maîtrise de la densité des perforations, permet une telle cuisson différenciée sans pour autant perturber la montée des dispositifs de verrouillage à soupape.

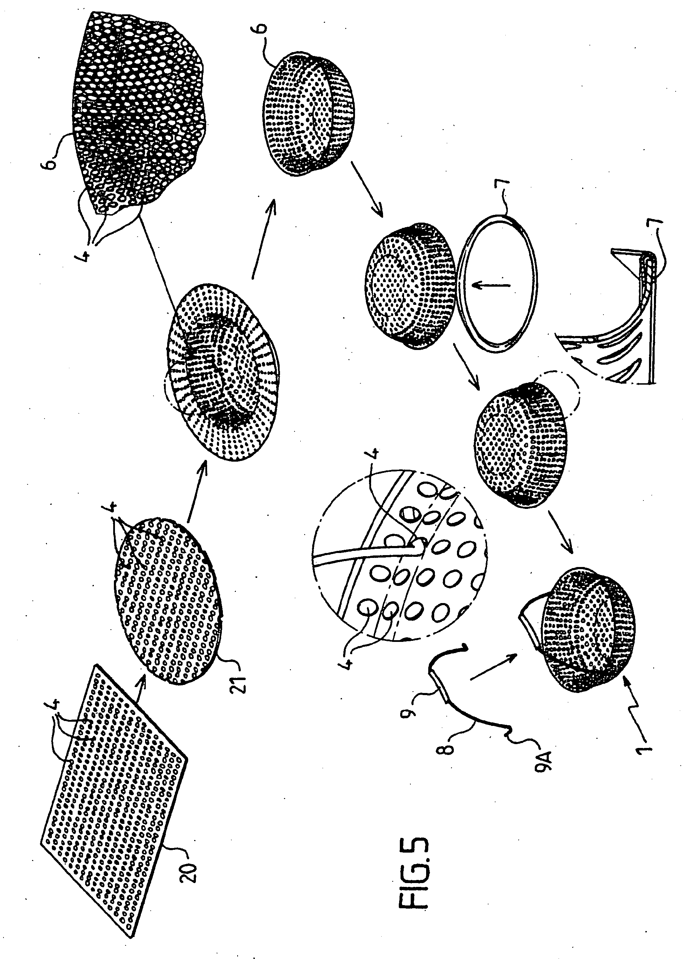

De manière particulièrement avantageuse, le procédé de fabrication d'un panier de cuisson d'aliments pour autocuiseur conforme à l'invention sera réalisé par emboutissage d'une feuille de métal, par exemple en inox, tel qu'illustré à la figure 5.

Tel qu'illustré à la figure 5, le procédé comporte les étapes successives suivantes :
a) On perfore la feuille de métal 20.
b) On découpe la feuille 20 pour obtenir un flan 21, à la forme finale du panier, par exemple circulaire.
c) On assure l'emboutissage du flan 21 dans sa partie centrale.
d) On assure le détourage du bord pour obtenir le panier 1.

Il est bien évidemment possible également de débuter le procédé à partir d'une feuille de métal préalablement perforée sans sortir du cadre de l'invention.

De manière plus précise, la feuille de métal 20 peut être perforée avantageusement sur toute sa surface, et par exemple à l'aide d'une série de perforations 4 en lignes continues ou selon toute autre configuration dès l'instant qu'on perfore la feuille 20, de manière que les perforations 4 représentent au moins 30% de la surface totale de la feuille.

L'emboutissage proprement dit est assuré de manière connue par l'homme du métier, la limite inférieure de réalisation du panier par emboutissage étant liée à un niveau de perforations 4 représentant au moins 30% de la surface totale de la feuille.

Tel qu'illustré à la figure 5, la déformation des perforations 4 lors de l'opération première d'emboutissage, et notamment l'étirement différencié des perforations 4 supérieures, permet d'assurer une bonne déformation de la feuille garantissant la réussite de l'emboutissage.

De manière préférentielle, on perfore la feuille 20 de manière que les perforations représentent au moins 35%, de préférence entre 35 et 58%, de la surface totale de la feuille.

Tel qu'illustré, on perfore la feuille sur la totalité de sa surface. Lors de l'opération préliminaire à l'emboutissage, la perforation des feuilles est réalisée de manière à obtenir des perforations circulaires de diamètres moyens compris entre 3 et 5 mm et d'entraxe compris entre 5 et 8 mm, la découpe du flan étant, par la suite, circulaire.

A l'issue de la première phase d'emboutissage, on assure le détourage du bord jusqu'à obtenir un bord périphérique supérieur 6 du panier sensiblement recourbé vers l'extérieur et de faible longueur radiale.

Par la suite, on positionne un jonc périphérique circulaire 7 sur le bord périphérique recourbé 6, puis on assure son sertissage sur ledit bord.

Avantageusement, l'emboutissage est réalisé de manière que la jonction entre le fond 2 et les parois latérales 3 du panier présente une courbure régulière.

Par la suite, l'anse 8 est mise en place, les extrémités 9A de ladite anse étant insérées dans les perforations 4.

Le tableau 1 ci-dessous montre, de manière comparative, les résultats de préservation de vitamine C obtenus en cuisson vapeur pour différents légumes, dans le cas d'une cuisson dans un panier classique de l'art antérieur (sans purge) et dans un panier selon l'invention avec un système de purge sur l'autocuiseur. A titre d'exemple, on estime que pour les haricots verts, le système de purge réduit le temps de cuisson de l'ordre de 35 à 41% et améliore de l'ordre de 23/25% la préservation de la vitamine C.

**TABLEAU 1**

| PRESERVATION DE LA VITAMINE C EN CUISSON VAPEUR | | | | | | | | |
|---|---|---|---|---|---|---|---|---|
| | Epinard | Brocoli frais | Brocoli surgelé | Carotte | Chou fleur frais | Chou fleur surgelé | Courgette | Haricot vert |
| **Teneur vitC dans le légume cru en mg/100g** | 22,3 | 137.5 | 52,7 | 28,5 | 54,0 | 35,0 | 24,8 | 3,0 |
| **Temps** | | | | | | | | |
| - Panier (art antérieur) | 10' | 9'30 | 8'50 | 10'30 | 11' | 11'30 | 9'30 | 12' |
| - Panier de l'invention | 4' | 2'30 | 1'30 | 4'30 | 2'30 | 2' | 2' | 4'30 |
| **Gain %** | - 60% | - 74% | - 83% | - 57% | - 77% | - 83% | - 79% | - 62% |
| **Préservation vitC%** | | | | | | | | |
| - Panier (art antérieur) | 53% | 34% | 85% | 61% | 78% | 62% | 37% | 24% |
| - Panier de l'invention | 67% | 40% | 97% | 72% | 91% | 78% | 52% | 39% |
| **Gain %** | + 26% | + 18% | + 14% | + 18% | + 17% | + 27% | + 42% | + 62% |

Le panier de l'art antérieur était formé par un panier métallique perforé d'orifices de l'ordre de 3 mm environ, ces orifices étant ménagés à travers le fond du panier et représentant largement moins de 20% de la surface totale du panier. Le panier selon l'invention était formé par un panier similaire. à celui illustré aux figures 1 à 5 et il comportait une série d'orifices 4 de diamètre de l'ordre de 5 mm environ répartis régulièrement sur la totalité de la surface du panier jusqu'au bord supérieur 6 et représentant 30% de la surface du panier.

Les résultats montrent de manière nette le gain de temps de cuisson obtenu qui, selon les légumes considérés, permet une réduction du temps de cuisson de l'ordre de 57 à 83%.

De la même façon, la préservation de la vitamine C dans les légumes considérés est largement augmentée, puisqu'on note une rétention supérieure de la vitamine C, variable selon les légumes considérés, mais qui permet un gain de rétention vitaminique pouvant varier de 14 à 62%.

Ces résultats améliorés sont à mettre en relation avec la configuration spécifique du panier selon l'invention dont la dimension, la répartition et la densité des perforations 4 permettent des mouvements optimaux du flux de vapeur, favorisant un excellent échange de chaleur à travers la totalité de la masse des légumes, ce qui permet une cuisson rapide et homogène, gage d'une meilleure rétention vitaminique.

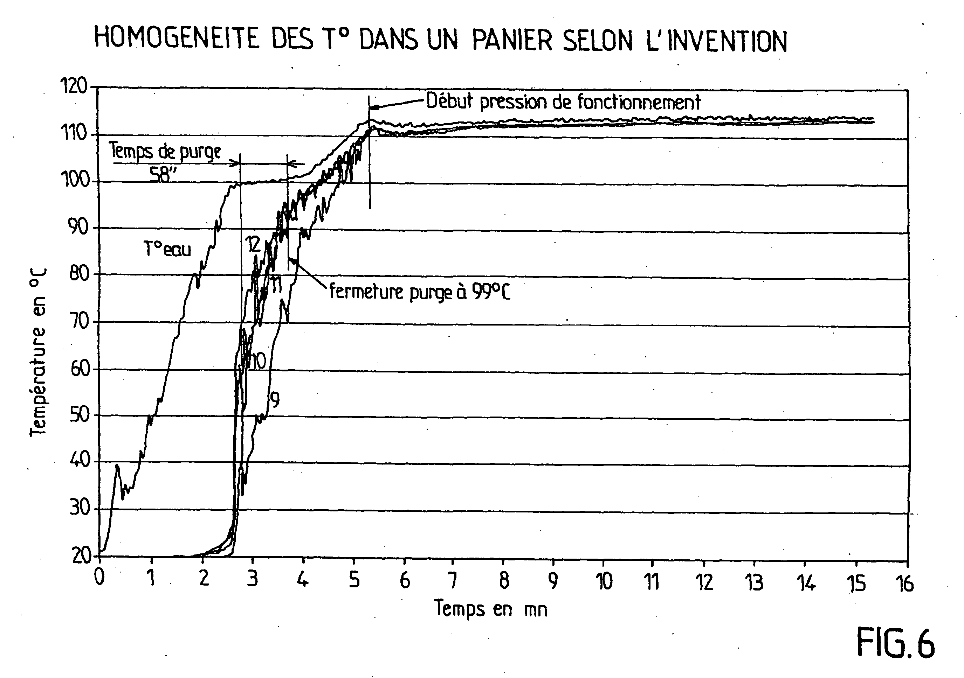

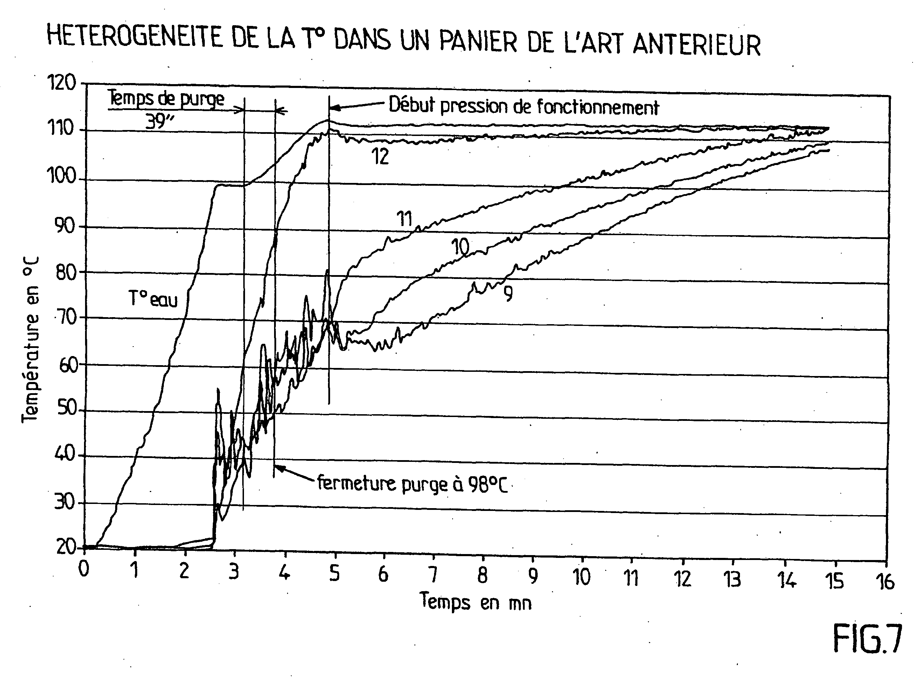

Les phénomènes avantageux impliqués trouvent leur explication dans l'étude comparative des graphes illustrés aux figures 6 et 7, montrant les différences d'homogénéité de montée en températures des aliments, en l'occurrence de pommes de terre, dans un panier selon l'invention (figure 6) et dans un panier de l'art antérieur (figure 7).

Les deux paniers présentaient des caractéristiques techniques identiques aux deux paniers précédemment définis.

Selon les graphes, il apparaît que dans un panier selon l'invention, les niveaux de températures étant mesurés à l'aide de quatre sondes réparties dans la partie centrale du panier à différentes hauteurs au sein des aliments, la montée en températures, quelque soit la sonde considérée, est particulièrement homogène et rapide, dans l'intervalle t₁ = 2 min 30 sec et t₂ = 5 min 30 sec, après le début de la cuisson. La température de cuisson courante est obtenue dès 5 min 30 sec de cuisson environ et est parfaitement égale et homogène au sein des aliments, quelque soit leur position dans le panier, puisque la température des quatre sondes est identique et de l'ordre de 110°C environ.

En revanche, dans un panier selon l'art antérieur, la température de cuisson des aliments est particulièrement hétérogène, les quatre courbes de températures n'étant (et encore imparfaitement) sensiblement égales entre les quatre sondes qu'après environ quinze minutes de cuisson.

Au cours de ces essais, la pression moyenne de cuisson était de l'ordre de 1,5 bar, chaque autocuiseur étant équipé d'un système de purge favorisant l'évacuation de la vapeur d'eau hors de l'enceinte de l'autocuiseur lors de la montée en pression.

Ces graphes montrent également la vitesse de montée en températures dans un panier selon l'invention, puisque dès l'atteinte de la pression moyenne de fonctionnement, autour de 110°C, la totalité de la masse des aliments atteint la température moyenne de fonctionnement de l'ordre de 110°C. Inversement, dans un panier de l'art antérieur, la température moyenne de 110°C n'est atteinte qu'après 14 à 15 min de fonctionnement.

Ces résultats attestent donc de l'efficacité du panier de cuisson selon l'invention en terme de réduction du temps de cuisson et en terme de préservation des vitamines. Ce panier présente également l'avantage d'éviter, en raison de ses perforations optimisées et réparties régulièrement, la création de zones localisées de rétention d'air. Néanmoins, il s'avère important de noter que le gain de temps et de rétention vitaminique est très variable d'un légume à l'autre, le temps de cuisson pouvant être divisé de 2,5 à 5,5 fois, la perte de vitamine C à la cuisson pouvant diminuer de 1,3 à 5 fois environ.

## Revendications

1. Procédé de fabrication d'un panier (1) de cuisson d'aliments pour autocuiseur par emboutissage d'une feuille de métal (20) destinée à définir le fond (2) et les parois latérales (3) du panier (1), **caractérisé par** les étapes successives suivantes :
a) On perfore la feuille de métal (20) ou on débute le procédé à l'aide d'une feuille préalablement perforée.
b) On découpe la feuille (20) pour obtenir un flan (21) à la forme finale du panier.
c) On assure l'emboutissage du flan (21) dans sa partie centrale, l'emboutissage étant réalisé de manière que la jonction entre le fond (2) et les parois latérales (3) du panier (1) présente une courbure régulière.

2. Procédé selon la revendication 1 **caractérisé en ce qu'**il comprend une étape d), postérieure à l'étape c), dans laquelle on assure le détourage du bord pour obtenir le panier (1).

3. Procédé selon la revendication 2 **caractérisé en qu'**on assure le détourage du bord jusqu'à obtenir un bord périphérique supérieur (6) du panier (1) sensiblement recourbé vers l'extérieur.

4. Procédé selon la revendication 3 **caractérisé en ce qu'**on positionne un jonc périphérique circulaire (7) sur le bord périphérique (6) recourbé et on assure son sertissage sur ledit bord (6).

5. Procédé selon l'une des revendications précédentes **caractérisé en ce qu'**on perfore la feuille (20) de manière que les perforations (4) représentent au moins 30% de la surface totale de la feuille (20).

6. Procédé selon la revendication 5 **caractérisé en ce qu'**on perfore la feuille (20) de manière que les perforations (4) représentent au moins 35%, de préférence entre 35 et 58%, de la surface totale de la feuille (20).

7. Procédé selon l'une des revendications précédentes **caractérisé en ce qu'**on perfore la feuille (20) de façon que les perforations (4) soient ménagées au moins à travers les parois latérales (3).

8. Procédé selon l'une des revendications précédentes **caractérisé en ce qu'**on perfore la feuille (20) sur la totalité de sa surface.

9. Procédé selon l'une des revendications précédentes **caractérisé en ce qu'**on perfore la feuille (20) pour obtenir des perforations (4) circulaires, de diamètre moyen compris entre 3 et 5 mm et d'entraxe compris entre 5 et 8 mm.

10. Procédé selon l'une des revendications précédentes **caractérisé en ce que** la découpe du flan (21) est circulaire.

11. Procédé selon l'une des revendications précédentes **caractérisé en ce que** ladite courbure présente une valeur R supérieure ou égale à H/2, H étant la hauteur du panier (1).

## Claims

1. Method of manufacturing a food cooking basket (1) for a pressure cooker by pressing a sheet of metal (20) intended to define the bottom (2) and the side walls (3) of the basket (1), **characterised by** the following successive steps:
a) The sheet of metal (20) is perforated or the process is begun using a previously perforated sheet.
b) The sheet (20) is cropped in order to obtain a blank (21) to the final shape of the basket.
c) The pressing of the blank (21) is carried out in its central part, said pressing being carried out so that the join between the bottom (2) and the side walls (3) of the basket (1) has a regular curvature.

2. Method according to claim 1 **characterised in that** it comprises a step d), which takes place after step c) and in which the edge is trimmed in order to obtain the basket (1).

3. Method according to claim 2, **characterised in that** the edge is trimmed until a peripheral top edge (6) of the basket (1) substantially curved towards the outside is obtained.

4. Method according to claim 3, **characterised in that** a circular peripheral ring (7) is positioned on the peripheral edge (6) and is crimped to the said edge (6).

5. Method according to one of the preceding claims, **characterised in that** the sheet (20) is perforated so that the perforations (4) represent at least 30% of the total surface of the sheet (20).

6. Method according to claim 5, **characterised in that** the sheet (20) is perforated so that the perforations (4) represent at least 35%, and preferably between 35% and 58%, of the total surface of the sheet (20).

7. Method according to one of the preceding claims, **characterised in that** the sheet (20) is perforated so that the perforations (4) are formed at least through the side walls (3).

8. Method according to one of the preceding claims, **characterised in that** the sheet (20) is perforated over its entire surface.

9. Method according to one of the preceding claims, **characterised in that** the sheet (20) is perforated in order to obtain circular perforations (4), with a mean diameter of between 3 and 5 mm and a distance between centres of between 5 and 8 mm.

10. Method according to one of the preceding claims, **characterised in that** the outline of the blank (21) is circular.

11. Method according to one of the preceding claims, **characterised in that** said curvature has a radius of curvature R that is greater than or equal to H/2, where H is the height of the basket (1).

## Patentansprüche

1. Verfahren zur Herstellung eines Korbes (1) zum Garen von Nahrungsmitteln für einen Schnellkochtopf durch Tiefziehen einer Metallfolie (20), die dazu bestimmt ist, den Boden (2) und die Seitenwände (3) des Korbes (1) festzulegen, **gekennzeichnet durch** die folgenden aufeinander folgenden Schritte:
a) Perforieren der Metallfolie (20) oder Beginn des Verfahrens mithilfe einer im Voraus perforierten Folie.
b) Schneiden der Folie (20), um einen Zuschnitt (21) mit der endgültigen Form des Korbes zu erhalten.
c) Sicherstellen des Tiefziehens des Zuschnittes (21) in seinem mittleren Teil, wobei das Tiefziehen derart durchgeführt wird, dass der Übergang zwischen dem Boden (2) und den Seitenwänden (3) des Korbes (1) eine regelmäßige Krümmung darstellt.

2. Verfahren nach Anspruch 1, **dadurch gekennzeichnet, dass** es einen Schritt d) umfasst, der dem Schritt c) folgt, in dem ein Sicherstellen des Abschneidens des Randes, um den Korb (1) zu erhalten, stattfindet.

3. Verfahren nach Anspruch 2, **dadurch gekennzeichnet, dass** das Abschneiden des Randes sichergestellt wird, bis ein oberer peripherer Rand (6) des Korbes (1) erhalten wird, der im Wesentlichen nach außen gebogen ist.

4. Verfahren nach Anspruch 3, **dadurch gekennzeichnet, dass** ein kreisförmiger peripherer Ring (7) auf dem gebogenen peripheren Rand (6) angebracht wird und seine Falzung auf dem Rand (6) sichergestellt wird.

5. Verfahren nach einem der vorhergehenden Ansprüche, **dadurch gekennzeichnet, dass** die Folie (20) so perforiert wird, dass die Perforationen (4) mindestens 30% der Gesamtfläche der Folie (20) darstellen.

6. Verfahren nach Anspruch 5, **dadurch gekennzeichnet, dass** die Folie (20) so perforiert wird, dass die Perforationen (4) mindestens 35%, vorzugsweise zwischen 35 und 58% der Gesamtoberfläche der Folie (20) darstellen.

7. Verfahren nach einem der vorhergehenden Ansprüche, **dadurch gekennzeichnet, dass** die Folie (20) so perforiert wird, dass die Perforationen (4) zumindest quer durch die Seitenwände (3) angeordnet sind.

8. Verfahren nach einem der vorhergehenden Ansprüche, **dadurch gekennzeichnet, dass** die Folie (20) auf der Gesamtheit ihrer Oberfläche perforiert wird.

9. Verfahren nach einem der vorhergehenden Ansprüche, **dadurch gekennzeichnet, dass** die Folie (20) perforiert wird, um kreisförmige Perforationen (4) mit einem mittleren Durchmesser zwischen 3 und 5 mm und einem Achsabstand zwischen 5 und 8 mm zu erhalten.

10. Verfahren nach einem der vorhergehenden Ansprüche, **dadurch gekennzeichnet, dass** der Schnitt des Zuschnittes (21) kreisförmig ist.

11. Verfahren nach einem der vorhergehenden Ansprüche, **dadurch gekennzeichnet, dass** die Biegung einen Wert R hat, der größer oder gleich H/2 ist, wobei H die Höhe des Korbes (1) darstellt.
